# EUROPÄISCHE PATENTSCHRIFT

(11) **EP 1 242 214 B1**
(45) Veröffentlichungstag und Bekanntmachung des Hinweises auf die Patenterteilung: **07.04.2004**
(21) Anmeldenummer: 00993698.0
(22) Anmeldetag: 19.12.2000
(51) Int. Cl.: B23Q 11/10

(54) **Spanendes Werkzeug mit einer Einrichtung zum indirekten Kühlen einer Wendeplatte.**
Cutting tool with device for indirect cooling of an indexable insert
Outil de coupe avec dispositif de réfrigération indirecte d'une plaquette indexable.

(30) Priorität: 31.12.1999 DE 19963956; 01.04.2000 DE 10016046
(43) Veröffentlichungstag der Anmeldung: 25.09.2002
(73) Patentinhaber: Mauel, Volkmar, 52353 Düren (DE)
(72) Erfinder: Mauel, Volkmar, 52353 Düren (DE)
(74) Vertreter: Castell, Klaus, Dr.-Ing.
(86) Internationale Anmeldenummer: PCT/DE2000/004516
(87) Internationale Veröffentlichungsnummer: WO 2001/049448

(56) Entgegenhaltungen:
- EP-A- 0 186 067
- DE-A- 2 736 412
- FR-A- 1 173 190
- US-A- 2 524 232
- US-A- 3 455 000
- US-A- 5 761 974
- US-A- 5 829 926
- DERNOGA, J: "Internal - Cooled Bits" AMERICAN MACHINIST, Bd. 95, - 2. April 1951 (1951-04-02) Seite 66 XP002167495 New York
- PATENT ABSTRACTS OF JAPAN vol. 1998, no. 08, 30. Juni 1998 (1998-06-30) -& JP 10 058220 A (DAIKIN IND LTD), 3. März 1998 (1998-03-03)
- PATENT ABSTRACTS OF JAPAN vol. 1999, no. 02, 26. Februar 1999 (1999-02-26) & JP 10 296505 A (KISOO KK), 10. November 1998 (1998-11-10)

## Beschreibung

Die Erfindung betrifft ein spanendes Werkzeug mit einer Einrichtung zum indirekten Kühlen. Insbesondere betrifft die Erfindung einen Drehstahl bzw. einen Fräser.

Bei einer spanenden Bearbeitung von Werkstücken entstehen, insbesondere wenn mit hohen Bearbeitungsgeschwindigkeiten gearbeitet wird, verhältnismäßig hohe Temperaturen. Diese können den Spanvorgang beeinträchtigen und, bedingt durch eine thermische Ausdehnung des Werkzeugs, zu einer Überschreitung der zulässigen Toleranzen führen.

Aus diesem Grunde wird bei spanabhebenden Bearbeitungsvorgängen häufig ein Kühlmittel verwandt, welches direkt an die spanabhebende Stelle gebracht wird. Dieses kann einerseits durch gesonderte Düsen erfolgen. Andererseits schlägt beispielsweise die DE 82 22 702 U vor, in dem Werkzeug selbst einen Kanal für Kühlmittel vorzusehen, welcher in eine auf das Werkstück gerichtete Düse des Werkzeugs mündet.

Das auf diese Weise an die spanabhebende Stelle gebrachte Kühlmittel wird dann gemeinsam mit den Spänen abgeführt. Anschließend wird die Mischung aus Spänen und Kühlmittel entweder aufwendig entsorgt oder aber aufwendig getrennt und - gegebenenfalls - einem Recycling zugeführt.

Darüber hinaus ist aus der EP 0 186 067 A1, die den nächstrommenden Stand der Technik beschreibt, ein Werkzeug für spanabhebendes Bearbeiten bekannt, welches eine Zufuhrbohrung und eine Abfuhrbohrung für ein Kühlmittel aufweist. Diese Bohrungen münden in einen Einfuhrkanal und in einen Ausfuhrkanal einer Schneidplatte, sodass die Zufuhrbohrung und die Abfuhrbohrung letztendlich in einen Innenraum der Schneidplatte führen. Nachteilig hierbei ist es jedoch, dass die Schneidplatte nur derart an dem Werkzeug angebracht werden kann, dass sowohl Zufuhrbohrung und Einfuhrkanal als auch Abfuhrbohrung und Ausfuhrkanal miteinander fluchten müssen. Dies schränkt die Verwendung der hier offenbarten Schneidplatte extrem ein. Darüber hinaus ist die Herstellung einer derartigen Schneidplatte mit ihrem Innenraum sehr kostenintensiv, sodass das hier beschriebene Werkzeug insgesamt sehr unwirtschaftlich ist.

Es ist Aufgabe der Erfindung, diesen Nachteil zu vermeiden.

Als Lösung schlägt die Erfindung ein spanendes Werkzeug gemäss Anspruch 1.

Durch eine derartige Anordnung wird es erstmals möglich, ein Werkzeug unmittelbar zu kühlen bzw. mit einem Kühlmittel in Kontakt zu bringen, ohne dass dieses Kühlmittel an das bearbeitete Werkstück gelangt und somit verloren geht bzw. aufwendig recycelt werden muss.

Im vorliegenden Zusammenhang bezeichnet somit der Begriff einer indirekten Kühlung jeden Vorgang, bei welchem ein Kühlmittel oder ähnliches mit der spanabhebenden Stelle bzw. der Schärfe einer Schneide oder einer Wendeplatte nicht in Kontakt kommt.

Zwar ist eine derartige indirekte Kühlung an sich schon bekannt, da bereits Werkzeugrevolver bzw. Werkzeughalter mit Kühlmittelkanälen auf dem Markt sind. Die bekannten Anordnungen wirken jedoch mit konventionellen Werkzeugen, wie Drehstählen oder Fräsern, zusammen. Hierdurch entstehen verhältnismäßig viele Material- bzw. Bauteilübergänge, die zu sehr hohen Temperaturgradienten zwischen der spanabhebenden Stelle und dem eigentlichen Kühlsystem führen. Die herkömmlichen Werkzeuge an sich weisen gerade Mittel zum indirekten Kühlen, wie sie von vorliegender Erfindung vorgeschlagen werden, nicht auf.

Bei den erfindungsgemäßen Werkzeugen ermöglichen es die Mittel zum indirekten Kühlen, dieses können insbesondere Bohrungen bzw. Kanäle sein, durch welche ein Kühlmittel in das Werkzeug, wie beispielsweise einen Drehstahl oder einen Fräser, geführt werden, die Zahl der Material- bzw. Baugruppenübergänge erheblich zu reduzieren und eine wesentliche bessere Kühlung der spanabhebenden Stelle sicher stellen.

Diese außerordentlich gute Kühlung, welche letztlich die spanabhebende Stelle bzw. das Werkzeug nicht unmittelbar mit einem Kühlmittel in Kontakt bringt, ermöglicht die verschiedensten, unerwarteten Vorteile bei der spanenden Bearbeitung. So können beispielsweise temperaturempfindliche Werkstücke mit wesentlich höheren Geschwindigkeiten bearbeitet werden, als dieses bisher der Fall war. Darüber hinaus können besonders empfindliche Werkstücke, die zu chemischen Reaktionen mit dem Kühlmittel neigen, Verwendung finden. Der geschlossene Kühlmittelkreislauf ermöglicht es darüber hinaus, Flüssigkeiten zu verwenden, die speziell für die Kühlung ausgelegt sind, sodass die Kühlung noch darüber hinaus wesentlich effizienter ausgestaltet werden kann. Die wesentlich bessere Kontrolle der Temperatur des Werkzeuges ermöglicht somit auch eine wesentlich bessere Kontrolle der thermischen Ausdehnung, sodass die Maßhaltigkeit der Gesamtanordnung wesentlich verbessert werden kann.

Das erfindungsgemäße Werkzeug ermöglicht darüber hinaus auch bei bereits bekannten Spanvorgängen wesentliche Verbesserungen gegenüber eine direkte Beaufschlagung des Werkstücks mit Kühlmittel. Bei sehr hohen Bearbeitungsgeschwindigkeiten neigt das Kühlmittel dazu, von dem Werkstück weggeschleudert zu werden. Dieses ist beispielsweise fliehkraftbedingt. Darüber hinaus führt die hohe Temperatur an der spanenden Stelle zu Verdampfungsprozessen, die einem Nachführen von flüssigem Kühlmittel entgegenwirken. All diese Nachteile treten bei der erfindungsgemäßen indirekten Kühlung nicht auf. Durch geeignete Wahl des Kühlmittels, des Kühlmitteldurchsatzes sowie der Kühleinrichtung lässt sich die Kühlung der spanabhebenden Stelle nahezu beliebig beherrschen. Darüber hinaus ermöglicht es die Erfindung, für die spanende Bearbeitung Schneidöle oder ähnliches zu verwenden, die wegen ihrer schlechten Kühleigenschaften bis dato keine Anwendung finden konnten.

Die Kühlung ist besonders effektiv, wenn die Kühleinrichtung unmittelbar mit einer Schneide des spanenden Werkzeuges in Kontakt steht. Es versteht sich, dass in diesem Zusammenhang jede Baugruppe des Werkzeuges, die spanabhebend wirksam ist, als Schneide anzusehen ist. Insbesondere gilt dies auch für Wendeplatten.

Vorzugsweise ist in dem Werkzeug ein Kühlkanal vorgesehen, durch welchen ein Kühlmittel geleitet werden kann. Dieser Kühlkanal weist einen Kühlmitteleinlass und einen Kühlmittelauslass auf. Um die erfindungsgemäße indirekte Kühlung zu gewährleisten, sollte der Kühlmittelauslass von der Schneide des Werkzeugs wegweisen. Das den Kühlkanal verlassende Kühlmittel kann dann, je nach Anwendungsfall, gemeinsam mit den Spänen entsorgt oder in einen separaten Behälter aufgefangen werden. Vorzugsweise weist der Kühlmittelauslass einen Kühlsystemanschluss auf, sodass ein entsprechendes Kühlmittel ohne weiteres aufgefangen und - gegebenenfalls - wiederverwendet werden kann.

Ist auch der Kühlmitteleinlass mit einem Kühlsystemanschluss versehen, so kann das Kühlmittel ohne weiteres zirkuliert werden. Es versteht sich, dass für das Werkzeug ein separates Kühlsystem vorgesehen sein kann. Andererseits ist es auch ohne weiteres möglich, ein bereits an einer entsprechenden Maschine vorhandenes Kühlsystem zu nutzen. Insbesondere kann das Kühlsystem des Werkzeugs über wenigstens einen Anschluss mit einem Kühlsystem eines Werkzeugrevolvers verbunden sein. Hierbei ist es einerseits möglich, lediglich das momentan genutzte Werkzeug in dem Werkzeugrevolver von einem Kühlmittel durchströmen zu lassen. Andererseits können auch sämtliche Werkzeuge des Revolvers während des Betriebs von einem Kühlmittel durchströmt sein.

Zur Herstellung eines erfindungsgemäßen Werkzeugs ist es vorteilhaft, wenn zunächst ein Grundkörper mit den notwendigen Bohrungen für den Kühlmittelfluss bereitgestellt wird. Dann können die freien Flächen des Grundkörpers bearbeitet werden, sodass dieser die für das Werkzeug notwendige Form erhält. Dieser Bearbeitungsvorgang umfasst vorzugsweise die aufwendigen spanenden Bearbeitungen und ähnliches. Hiernach werden die Bohrungen an den notwendigen Positionen verschlossen und so der Kühlkanal bzw. die Kühlkanäle bereitgestellt. Hieran kann sich eine Nachbearbeitung, beispielsweise ein Nachschleifen, anschließen.

Derartige Werkzeuge sind in der Regel aus hochwertigen und verhältnismäßig harten Materialien gebildet. Daher ist das Bereitstellen der Bohrungen verhältnismäßig zweitaufwendig. Aus diesem Grunde wird vorgeschlagen, dass der Werkzeuggrundkörper aus wenigstens zwei Normgrundkörpern besteht, die fest miteinander verbunden sind bzw. werden: Wenigstens einer dieser Normgrundkörper kann bereits eine vorgefertigte Bohrung aufweisen, sodass bei der eigentlichen Herstellung des Werkzeugs auf den aufwendigen Bohrvorgang verzichtet werden kann. Insbesondere kann ein derartiger Normgrundkörper aus einem Meterhalbzeug, beispielsweise mit rechteckigern Querschnitt, entlang dessen Längsrichtung eine Bohrung verläuft, bereitgestellt werden. Je nach genauer Ausgestaltung des Werkzeugs brauchen dann lediglich kleinere Bohrungen noch bereitgestellt werden.

Die Normgrundkörper können beispielsweise durch Schweißen zu dem Grundkörper verbunden werden. Eine derartige Verbindung ist verhältnismäßig einfach herstellbar und hat sich im Betrieb als funktionssicher erwiesen.

Bei komplexeren Kühlkanalausgestaltungen können auch entsprechende Ausnehmungen, in welchen anschließend ein Kühlmittelfluss erfolgen soll, in dem entsprechenden Grundkörper ausgebildet werden. Durch Auflegen einer Verschlussplatte oder durch ähnliche Maßnahmen können danach diese Ausnehmungen verschlossen werden.

Besonders vorteilhaft ist ein Verschließen durch das Einsetzen einer Wendeplatte, da hierdurch die Wendeplatte unmittelbar mit dem Kühlmittel in Kontakt kommt und mit dem Einsetzen der Schneide ein ansonsten notwendiger zusätzlicher Bearbeitungsschritt des Verschließens eingespart werden kann.

Das erfindungsgemäße Zerspanungswerkzeug ermöglicht eine trockene Prozessführung bei der Bearbeitung von vielen Materialien. Dies ist besonders aus ökologischer Sicht wertvoll, da die bei dem Zerspanungsprozess anfallenden Späne frei von Kühlmittel sind. Hierdurch werden nicht nur Kosten bei der Entsorgung dieser Späne eingespart, sondern auch bei der Bereitstellung von Kühlmitteln, da dieses sich in einem vorzugsweise geschlossenen Kühlkreislauf befindet und somit lange Zeit benutzt werden kann, ohne dabei verloren zu gehen.

Weitere Vorteile, Ziele und Eigenschaften vorliegender Erfindung werden anhand der Beschreibung anliegender Zeichnung erläutert, in welcher beispielhaft zwei erfindungsgemäße Drehstähle, ein erfindungsgemäßer Fräser sowie eine erfindungsgemäße Anordnung aus einem Drehstahl und einem Werkzeugrevolver dargestellt sind. In der Zeichnung zeigen:
- Figur 1: eine schematische Seitenansicht eines erfindungsgemäßen Drehstahls,
- Figur 2: den Drehstahl nach Fig. 1 in Frontansicht,
- Figur 3: den Drehstahl nach Fign. 1 und 2 im Schnitt,
- Figur 4: einen erfindungsgemäßen Fräser in schematischer Darstellung und
- Figur 5: eine erfindungsgemäße Anordnung aus einem erfindungsgemäßen Drehstahl und einem Werkzeugrevolver in schematischer Darstellung.

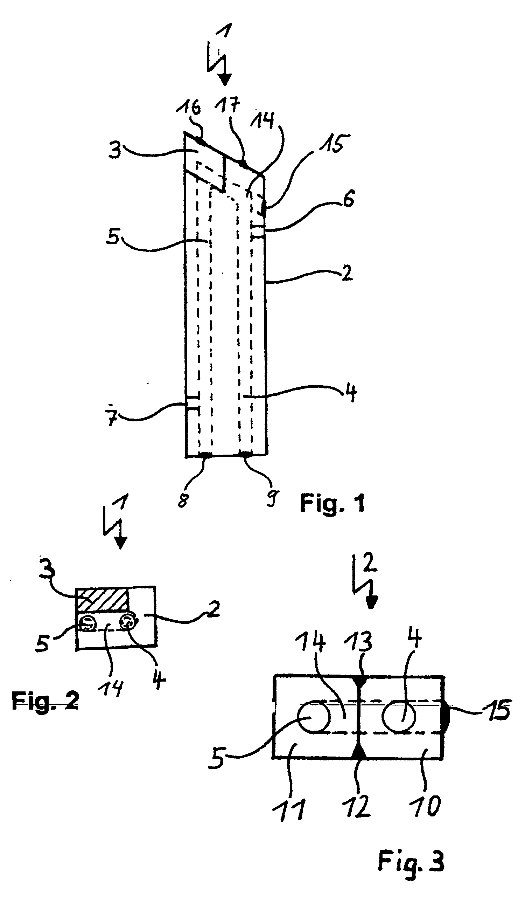

Das in Fig. 1 dargestellte Werkzeug ist ein Drehstahl 1, welcher im wesentlichen aus einem Grundkörper 2 und einer Schneidplatte 3 besteht. Der Grundkörper 2 weist zwei Hauptbohrungen 4 und 5 auf, die sich im wesentlichen parallel zueinander in Längserstreckungsrichtung des Grundkörpers erstrecken. Die beiden Hauptbohrungen 4 und 5 sind jeweils zentrale Bohrungen zweier Normkörper 10 und 11, die mittels zweier Schweißnähte 12 und 13 zu dem Grundkörper 2 zusammengesetzt sind.

Darüber hinaus weist der Grundkörper 2 noch die Bohrungen 6 und 7 sowie eine Bohrung 14 auf, welche bis unter die Schneidplatte 3 reicht und welche zu der die Schneidplatte haltenden Ausnehmung offen ist.

Die Bohrungen 4, 5 und 14 sind an ihren Ausgängen 8, 9 und 15 bis 17 verschlossen. Auf diese Weise entsteht ein Kühlmittelkanal, der von der Bohrung 6 als Kühlmitteleinlass über die Bohrungen 4 und 14 zur Schneidplatte 3 und über die Bohrung 5 zur Bohrung 7 als Kühlmittelauslass reicht.

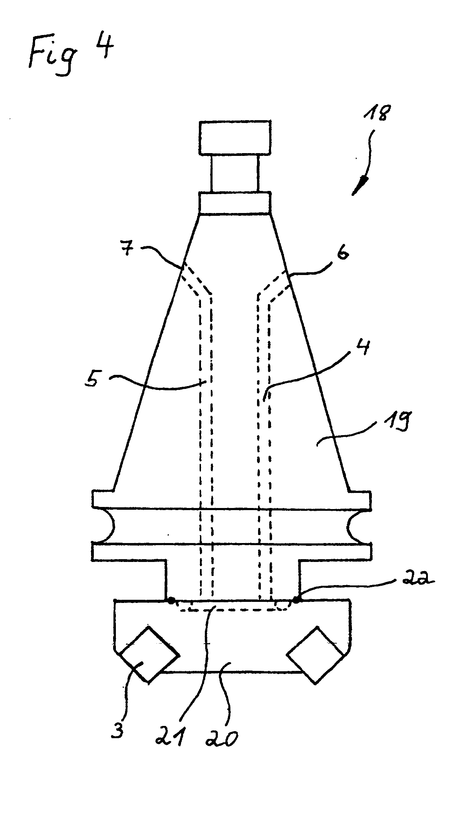

Das in Fig. 4 dargestellte Werkzeug ist ein Fräser 18, welcher in seiner Werkzeugaufnahme 19 Bohrungen 4 bis 7 aufweist. Diese Bohrungen führen von dem Kühlmitteleinlass 6 bzw. des Kühlmitteleinlass 7 zu einem Messerkopf 20 und münden in einer nutartigen Ausnehmung 21 desselben. Der Messerkopf 20 ist fest mit der Werkzeugaufnahme 19 verbunden und über eine Dichtung 22 abgedichtet. Auf diese Weise entsteht zwischen dem Messerkopf 20 und der Werkzeugaufnahme 10 ein nahezu vollständig umlaufender Ringkanal, dessen eines Ende in den Kanal 4 und dessen anderes Ende in den Kanal 5 führt.

Der Messerkopf ist darüber hinaus in bekannter Weise mit mehreren Schneidplatten 3 versehen.

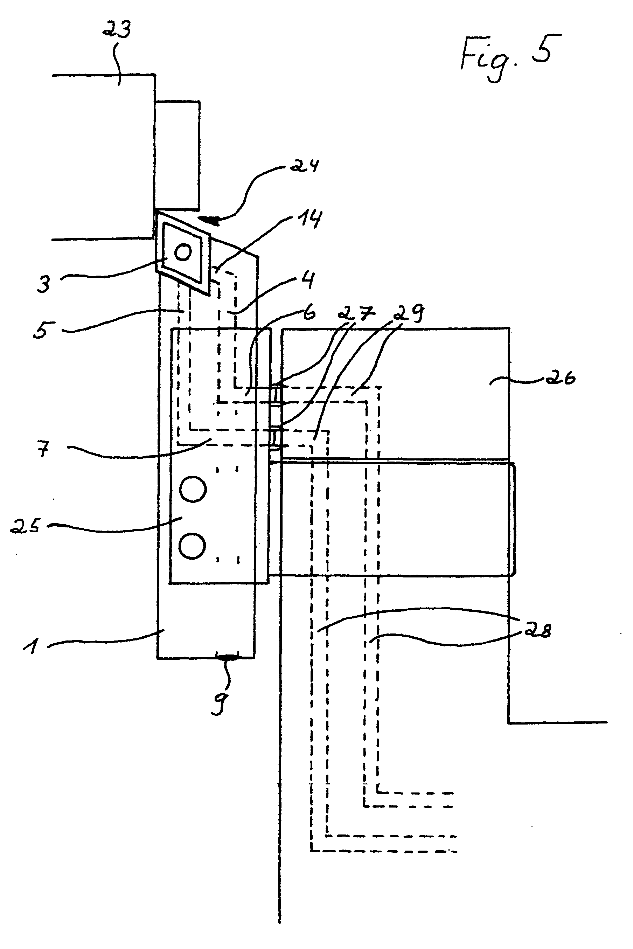

Der in Fig. 5 dargestellte Drehstahl 1 entspricht im wesentlichen dem Drehstahl nach Fign. 1 bis 3. Bei dem in Fig. 5 dargestellten Drehstahl 1 sind jedoch die Bohrungen 5 und 14 von der Ausnehmung für die Schneidplatte 3 ausgehend in den Grundkörper 2 eingebracht. Auf diese Weise brauchen diese Bohrungen nicht extra verschlossen werden. Das Verschließen geschieht mit Aufsetzen der Schneidplatte 3. Lediglich die Bohrung 4, die etwas versetzt bezüglich des Kühlmittelauslasses 7 angeordnet ist, ist an ihrem hinteren Ende 9 verschlossen.

In der Darstellung nach Fig. 5 setzt der Drehstahl 1 mit seiner Schneidplatte 3 an einem Werkstück 23 an einer spanabhebenden Stelle 24 an und wird hierzu von einem Werkzeughalter 25, der mit einem Revolver 26 zusammenwirkt, gehalten. Über Anschlüsse 27 sind der Kühlmitteleinlass 6 und Kühlmittelauslass 7 mit einem Kühlsystem 28 des Revolvers 26 verbunden. Hierzu ist ein an sich bekannter Revolver mit zusätzlichen Bohrungen 29 versehen.

Es versteht sich, dass die genaue Lage und Anordnung der Kühlmittelkanäle bzw. der diese Kühlmittelkanäle bedingenden Bohrungen, Ausnehmungen und Anschlüsse je nach konkretem Anwendungsfall geeignet gewählt sind.

## Patentansprüche

1. Spanendes Werkzeug mit wenigstens einer Schneide (3) und einer Einrichtung zum indirekten Kühlen, ***gekennzeichnet durch*** eine Wendeplatte, welche **durch** die Kühleinrichtung gekühlt wird, als Schneide (3), wobei das Werkzeug eine Ausnehmung bzw. Bohrung (14) für ein Kühlmittel aufweist, die **durch** die Wendeplatte oder einen Wendeplattenhalter verschlossen ist.

2. Werkzeug nach Anspruch 1, ***dadurch gekennzeichnet, dass*** die Wendeplatte unmittelbar mit der Kühleinrichtung in Kontakt steht.

3. Werkzeug nach einem der Ansprüche 1 und 2, ***gekennzeichnet durch*** einen Kühlkanal (4, 5, 6, 7) mit einem Kühlmitteleinlass (6) und einem von der Schneide (3) wegweisenden Kühlmittelauslass (7).

4. Werkzeug nach Anspruch 3, ***dadurch gekennzeichnet, dass*** der Kühlmittelaustass (7) mit einem Kühlsystemanschluss (27) versehen ist.

5. Werkzeug nach Anspruch 3 oder 4, ***dadurch gekennzeichnet, dass*** der Kühlmitteleinlass (6) mit einem Kühlsystemanschluss (27) versehen ist.

6. Drehstahl (1) mit den Merkmalen eines der Ansprüche 1 bis 5.

7. Drehstahl (1) nach Anspruch 6, ***dadurch gekennzeichnet, dass*** der Drehstahl (1) aus wenigstens zwei Normgrundkörper (10, 11) besteht, die fest miteinander verbunden sind, wobei wenigstens einer der Normgrundkörper (10, 11) eine Bohrung (4, 5, 6, 7, 14) aufweist.

8. Drehstahl (1) nach Anspruch7, ***dadurch gekennzeichnet, dass*** die Bohrung (4, 5, 6, 7, 14) an einem Freiwinkel des Drehstahls, an einer Schneidenfreifläche des Drehstahls und/oder an einem Rücken des Drehstahls verschlossen ist.

9. Fräser (18) mit den Merkmalen eines der Ansprüche 1 bis 5.

10. Anordnung aus einem Werkzeug (1) mit den Merkmalen eines der Ansprüche 1 bis 9 und aus einem das Werkzeug tragenden Revolver (26), ***dadurch gekennzeichnet, dass*** das Werkzeug wenigstens ein Kühlsystem (4, 5, 6, 7, 14, 21) zum indirekten Kühlen aufweist, welches über wenigstens einen Anschluss (27) mit einem Kühlsystem (28) des Revolvers (26) verbunden ist.

11. Anordnung nach Anspruch 10, ***dadurch gekennzeichnet, dass*** ein erster Anschluss (27) mit einem Kühlmitteleinlass (6) und ein zweiter Anschluss (27) mit einem Kühlmittelauslass (7) des Werkzeugs (1) verbunden ist.

12. Anordnung nach einem der Ansprüche 10 oder 11, ***dadurch gekennzeichnet, dass*** ein erster Anschluss (27) mit einer ersten Bohrung (29) des Revolvers (26) und ein zweiter Anschluss (27) mit einer zweiten Bohrung (29) des Revolvers (26) verbunden ist.

## Claims

1. A cutting tool with at least one cutting edge (3) and one device for indirect cooling, ***characterized by*** an indexable insert that is cooled by the cooling device as cutting edge (3), the tool comprising a recess or bore (14) for a coolant that is sealed by the indexable insert or an indexable insert holder.

2. The cutting tool according to claim 1, ***characterized in that*** the indexable insert is in direct contact with the cooling device.

3. The cutting tool according to any of the claims 1 and 2, ***characterized by*** a cooling channel (4, 5, 6, 7) with a coolant inlet (6) and a coolant outlet (7) away from the cutting edge (3).

4. The cutting tool according to claim 3, ***characterized in that*** the coolant outlet (7) is provided with a connection (27) to the cooling system.

5. The cutting tool according to claim 3 or 4, ***characterized in that*** the coolant inlet (6) is provided with a connection (27) to the cooling system.

6. A lathe tool (1) having the features of any of the claims 1 to 5.

7. The lathe tool (1) according to claim 6, ***characterized in that*** the lathe tool (1) is composed of at least two standard base bodies (10, 11) that are fixedly joined together, at least one of the standard base bodies (10, 11) comprising a bore (4, 5, 6, 7, 14).

8. The lathe tool (1) according to claim 7, ***characterized in that*** the bore (4, 5, 6, 7, 14) is closed at a clearance angle of the lathe tool, at a cutting edge relief face of the lathe tool and/or at back of the lathe tool.

9. A milling cutter (18) having the features of any of the claims 1 to 5.

10. An arrangement consisting of a tool (1) having the features of any of the claims 1 to 9 and of a turret (26) carrying the tool, ***characterized in that*** the tool comprises at least one cooling system (4, 5, 6, 7, 14, 21) for indirect cooling which is connected with a cooling system (28) of the turret (26) by at least one connection (27).

11. The arrangement according to claim 10, ***characterized in that*** a first connection (27) is connected to a coolant inlet (6) and a second connection (27) is connected to a coolant outlet (7) of the tool (1).

12. The arrangement according to any of the claims 10 or 11, ***characterized in that*** a first connection (27) is connected to a first bore (29) of the turret (26) and a second connection (27) is connected to a second bore (29) of the turret (26).

## Revendications

1. Outil de coupe avec au moins une arête de coupe (3) et un dispositif de réfrigération indirecte, ***caractérisé par*** une plaquette réversible réfrigérée par le dispositif de réfrigération faisant office d'arête de coupe (3), l'outil comportant un évidement ou un trou (14) fermé par la plaquette réversible ou une queue de plaquette réversible et destiné à recevoir un réfrigérant.

2. Outil selon la revendication 1, ***caractérisé en ce que*** la plaquette réversible est en contact direct avec le dispositif de réfrigération.

3. Outil selon l'une quelconque des revendications 1 et 2, ***caractérisé par*** un conduit de réfrigération (4, 5, 6, 7) avec une arrivée de réfrigérant (6) et une sortie de réfrigérant (7) détournée de l'arête de coupe (3).

4. Outil selon la revendication 3, ***caractérisé en ce que*** la sortie de réfrigérant (7) est pourvue d'un raccordement (27) au système de réfrigération.

5. Outil selon la revendication 3 ou 4, **caractérisé en ce que** l'arrivée de réfrigérant (6) est pourvue d'un raccordement (27) au système de réfrigération.

6. Outil de tournage (1) ayant les caractéristiques de l'une quelconque des revendications 1 à 5.

7. Outil de tournage (1) selon la revendication 6, ***caractérisé en ce* que** l'outil de tournage (1) est constitué d'au moins deux corps de base standardisés (10, 11) solidarisé, au moins l'un des corps de base standardisés (10, 11) comportant un trou (4, 5, 6, 7, 14).

8. Outil de tournage (1) selon la revendication 7, ***caractérisé en ce que*** le trou (4, 5, 6, 7, 14) est obturé à un angle de dépouille de l'outil de tournage, à une dépouille de l'arête de coupe de l'outil de tournage et/ou au dos de l'outil de tournage.

9. Fraise (18) ayant les caractéristiques de l'une quelconque des revendications 1 à 5.

10. Arrangement constitué d'un outil (1) ayant les caractéristiques de l'une quelconque des revendications 1 à 9 et d'une tourelle (26) portant l'outil, ***caractérisé en ce que*** l'outil comporte au moins un système de réfrigération (4, 5, 6, 7, 14, 21) pour la réfrigération indirecte qui est relié à un système de réfrigération (28) de la tourelle (26) par l'intermédiaire d'au moins un raccordement (27).

11. Arrangement selon la revendication 10, ***caractérisé en ce qu'***un premier raccordement (27) est relié à une arrivée de réfrigérant (6) et un second raccordement (27) est relié à une sortie de réfrigérant (7) de l'outil (1).

12. Arrangement selon l'une quelconque des revendications 10 ou 11, ***caractérisé en ce qu'***un premier raccordement (27) est relié à un premier trou (29) de la tourelle (26) et un second raccordement (27) est relié à un second trou (29) de la tourelle (26).
